# FASCICULE DE BREVET EUROPEEN

(11) **EP 4 110 706 B1**
(45) Date de publication et mention de la délivrance du brevet: **15.11.2023**
(21) Numéro de dépôt: 21710552.7
(22) Date de dépôt: 24.02.2021
(51) Int. Cl.: B65D 65/46, F42B 12/36, F42B 12/76

(54) **DOSES UNITAIRES POUR LA LIBERATION D'UNE FORMULATION AQUEUSE**
EINHEITSDOSIS ZUR FREISETZUNG EINER WÄSSRIGEN FORMULIERUNG
UNIT DOSES FOR RELEASING AN AQUEOUS FORMULATION

(30) Priorité: 27.02.2020 FR 2001964
(43) Date de publication de la demande: 04.01.2023
(73) Titulaire: Melchior Material and Life Science France, 64170 Lacq (FR)
(72) Inventeur: GUERRET, Olivier, 46170 PERN (FR); COURDESSES, Brice, 46150 PARNAC (FR)
(74) Mandataire: Regimbeau
(86) Numéro de dépôt international: PCT/FR2021/050320
(87) Numéro de publication internationale: WO 2021/170953

(56) Documents cités:
- WO-A2-02/060251
- US-A- 5 448 951
- US-A1- 2005 137 332

## Description

L'utilisation de matières plastiques dans des applications de plein air est source d'une accumulation de détritus de très longue durée de vie. Les sacs et les bouteilles en plastiques doivent être : soit recyclables par voie industrielle (ce qui implique toute une logistique de collecte et de recyclage) ; soit biodégradable, de préférence dans des conditions naturelles de compostage.

Les matières plastiques peuvent être aussi cachées dans des formulations liquides : par exemple une peinture dite à l'huile est généralement composée de polymères liquides à température ambiante comme du polyéthylène glycol, des cires, des polyesters ou des polyuréthanes ou des monomères réticulables ou de solvants comme le glycol ou le propylène glycol. Il n'en reste pas moins qu'une fois la peinture sèche, les molécules de polymères s'accumulent et peuvent constituer des pollutions invisibles mais ayant un fort impact sur la faune et l'environnement à cause des microparticules qu'elles génèrent.

Par exemple, les billes de peintures communément utilisées pour le jeu de « paint ball » sont constituées d'une enveloppe de gélatine parfaitement biodégradable mais qui pour rester intègres, doit contenir un remplissage tel qu'une peinture parfaitement hydrophobe donc à base de polymères liquides. De telles billes avec une enveloppe de gélatine sont également décrites dans WO02/060251, qui divulgue une dose unitaire selon le préambule de la présente revendication 1 pour l'administration d'un pesticide. Un désavantage de ces billes est d'ailleurs leur stabilité au contact de l'atmosphère puisque l'humidité de l'air ramollit leur enveloppe et provoque des risques d'explosions de la bille dans les propulseurs.

En outre, leur comportement durant le stockage et le transport est problématique du fait du ramollissement et de la fragilisation de l'enveloppe. Des billes peuvent se coller entre elles et bloquer les propulseurs. D'autres fragilisées peuvent exploser dans le propulseur.

La problématique de remplacer une formulation de remplissage hydrophobe telle qu'une peinture à l'huile par une formulation aqueuse à base d'eau et de pigments a été abordée dans d'autres inventions. Le principe a consisté à substituer l'enveloppe de gélatine par une enveloppe de polymère. Citons à titre d'exemple le polystyrène (EP0609298) le polypropylène ou le polyéthylène (EP2490945). Des billes fabriquées avec ces polymères sont étanches à l'eau et peuvent donc contenir des formulations aqueuses, mais les résidus de l'enveloppe restent un problème important d'un point de vue environnemental. Notons que dans ces brevets, les auteurs prévoient la possibilité d'incorporer des polymères biodégradables sans en évaluer la difficulté de réalisation : leur principale invention consistant dans le procédé d'assemblage de deux hémisphères par fusion ou collage. A notre connaissance aucun de ces procédés n'a pu être développé industriellement à ce jour.

Une seconde tentative pour contourner ce problème se trouve dans US5448951, où les auteurs espèrent produire des billes de paintball par un procédé d'injection moulage d'un matériau biodégradable à base d'amidon. Ce genre de procédé conduirait théoriquement à des billes d'épaisseurs constantes. Cependant, aucune application industrielle de ce procédé n'a été mise en oeuvre probablement du fait de la complexité de remplir des billes déjà formées. La stabilité des billes au stockage est par ailleurs similaire à celle des billes en gélatine puisque l'amidon, matériau hydrophile, peut absorber une part de l'humidité de l'air.

Une seconde tentative de fabrication de billes paint ball en matériau biodégradable est décrite dans US2006/0005732A1 via un procédé de soufflage/moulage mais la difficulté de remplir des objets sphériques n'a pas permis de rendre possible un développement industriel de la technologie.

Une dernière façon de contourner le problème a été décrite dans les brevets US8342099, WO2014/016510A1, FR2921475A1 et FR2993864A1 et FR3018268A1 en utilisant des enveloppes en polymère oxodégradable via un procédé de thermosoudure de 2 demi-sphères pré-remplies. Cependant, ces solutions ne sont pas satisfaisantes pour 3 raisons: 1) les polymères oxodégradables se délitent bien sous l'action de la lumière et de l'oxygène mais ils aboutissent à des microparticules à longue durée de vie, dangereuses pour l'environnement ; 2) lorsque le polymère est utilisé pour la fabrication de billes, il entre en contact avec l'air et la lumière et son processus de dégradation commence. Après quelques mois de stockage, ces billes peuvent devenir suffisamment fragiles au point qu'elles explosent dans le propulseur ; 3) le procédé de fabrication décrit dans FR3018268A1 génère environ 40% de déchets plastique du fait des découpages des formes dans le film de départ. Or, ces chutes ayant entamé leur processus de dégradation, elles ne sont pas recyclables dans un nouveau matériau plastique.

De plus d'un point de vue environnemental, le fait que les polymères oxodégradables contiennent des métaux de transition rend les résidus ultimes de ces polymères très néfastes à long terme.

Enfin pour compléter la présentation du contexte de l'invention, il convient de rappeler que le brevet FR3018268A1 décrit le principe d'une machine dont le fonctionnement consiste tout d'abord au passage d'un film de polymère dans une thermoformeuse pour créer des empreintes de demi-sphères puis de découper en bandes parallèles ce film pour alimenter des modules de production de billes. Dans la réalité, le module de production est organisé autour d'un plateau tournant qui exécute les tâches suivantes :
- Deux bandes d'hémisphères alimentent le premier poste qui va positionner 4 hémisphères dans des trous circulaires positionnés en carré.
- Les 4 hémisphères sont ensuite remplis par la formulation de peinture via des buses d'alimentation reliées à une nourrice principale.
- Les 2 hémisphères les plus à l'extérieur sont ensuite retournés sur les 2 de l'intérieur grâce à des ventouses montées sur des bras articulés.
- La première bille subit une soudure par ultrason et la pression simultanément exercée sur la circonférence découpe la circonférence et libère la bille du squelette du film de polymère.
- La seconde bille subit le même processus.
- chaque bille est expulsée vers un récupérateur

Les inventeurs ont constaté que le rendement de billes correctement scellées selon ce procédé n'excède pas 50%. Lorsque la formulation a un coût faible comme une peinture à l'eau, cela peut être tolérable, mais lorsque la formulation contient des principes actifs micro-encapsulés à haute valeur ajoutée, cela éteint toute possibilité de développement industriel.

En effet, dans certains modes de réalisation ou applications, les billes représentent une forme de dose unitaire, parmi d'autres, visant au stockage, au transport ainsi qu'à la délivrance voire à la libération d'un ou plusieurs principes actifs pharmaceutiques ou phytopharmaceutique en un point donné, par exemple.

Lorsque l'on parle en effet de dose unitaire, il s'agit, comme pour le domaine pharmaceutique lorsque l'on parle de forme galénique, d'une composition comprenant une enveloppe, protégeant une formulation vis-à-vis de l'extérieur, contenant une quantité prédéterminée de ladite formulation, avec ou sans principe actif, et destinée à une délivrance en un point donné et à un moment voulu.

De telles formes de doses unitaires doivent ainsi préserver la formulation interne, qu'il s'agisse de peinture ou d'une formulation comprenant un principe actif. La constitution de ces formes de dose unitaire doit permettre leur manipulation, leur stockage et leur transport en préservant la formulation ainsi contenue tout en permettant une dispensation et une libération aisée ou contrôlée de la formulation contenue à l'instant et au lieu souhaités.

Les formes de doses unitaires peuvent effectivement être sphériques comme ce qui est observé pour des billes de paint-ball. Ceci étant, une telle forme sphérique, si elle présente des avantages car utilisable dans un dispositif de propulsion pneumatique, n'est pas limitative. En effet, on peut tout aussi bien envisager des doses unitaires de forme et de géométrie variée, hémisphérique ou cylindrique, par exemple. La forme sera dictée par le procédé de fabrication qui pourra être du type de celui des billes de paint-ball comme évoqué plus avant mais aussi de l'application : un projectile aura intérêt à être sphérique mais d'autres formes peuvent être employées si les enveloppes sont destinées à être percées ou déchirées dans un appareil ad hoc. Par exemple, une dose unitaire peut aussi bien se présenter sous la forme d'un cylindre rempli d'une formulation adaptée et serti par soudure aux deux extrémités, par exemple.

Le brevet FR3018268A1 décrit une étape de thermoformage à partir d'un film puis une étape de remplissage, de soudure et de découpage de l'enveloppe des billes.

Les inventeurs ont constaté que les billes obtenues selon le procédé FR 3018268A1 avaient une mauvaise balistique.

Il convenait donc de trouver un nouveau matériau d'enveloppe ainsi qu'une géométrie ou conformation afin d'obtenir des billes biodégradables de bonne qualité, n'explosant pas dans le canon et ayant une balistique convenable tout en permettant des rendements autorisant un développement industriel.

US 2005/137332 décrit un matériau comprenant un mélange de 60-80% en poids d'au moins un polymère (A) biodégradable flexible ayant une température de transition vitreuse inférieure à 0°C et 40-20% en poids d'au moins un polymère (B) biodégradable rigide ayant une température de transition vitreuse supérieure à 10°C. Ce matériau est destiné principalement au moulage par injection d'article ou encore à l'extrusion ou au calandrage de films ou feuilles. Aucune dose unitaire enfermant une formulation aqueuse n'est décrite dans ce document.

### BREVE DESCRIPTION DE L'INVENTION

De manière à résoudre l'ensemble de ces problèmes, la demanderesse a trouvé qu'il était possible d'utiliser un matériau biodégradable nouveau pour la fabrication de formes de doses unitaires visant à contenir, stocker, préserver, transporter et délivrer une formulation aqueuse ; c'est le premier objet de l'invention. Outre son caractère bio dégradable, ce matériau est caractérisé par un comportement élastique pour résister à des températures de stockages proches de 0°C sans que les doses unitaires ne se brisent, et par un comportement fragile pour que les doses unitaires puissent se rompre facilement au moment de la mise en oeuvre, à température ambiante et ce afin de libérer la formulation contenue. Ainsi, elles peuvent exploser au contact du support sur lequel elles sont projetées via un dispositif propulseur pneumatique, par exemple, et ce à température ambiante. Alternativement, comme le matériau est biodégradable, une dose unitaire selon l'invention peut être disposée à un endroit souhaité, à l'air et à la lumière. L'enveloppe se décomposera et laissera échapper la formulation de remplissage qui pourra contenir un actif qui sera donc libéré, en particulier selon une cinétique de diffusion contrôlée et ce, selon la composition de la formulation. De plus, la dose unitaire peut aussi bien être manipulée par un utilisateur qui pourra rompre l'enveloppe, par écrasement ou déchirure, au moment voulu, et ce pour libérer la formulation de remplissage.

Le matériau de l'enveloppe des doses unitaires de l'invention contient donc un polymère biodégradable présentant une température de transition vitreuse inférieure à 0°C et un polymère thermoplastique biodégradable de haute température de transition vitreuse, ayant un caractère fragile. Le matériau de l'enveloppe peut aussi comprendre une charge minérale et des additifs permettant une mise en oeuvre aisée.

De manière surprenante, dans le cas des doses unitaires sphériques revendiquées, des billes par exemple, l'invention permet de remédier aux problèmes de mauvaise soudure et de fragilité au stockage des billes obtenues selon un procédé de l'art antérieur tel que celui décrit dans FR3018268A1.Cette découverte permet d'améliorer le rendement en billes stables au stockage et de bonne balistique.

### Description détaillée de l'invention

Dans le but d'une bonne lecture de la description de l'invention il est important de rappeler tout d'abord les définitions suivantes :
- Polymère biodégradable : enchainement de monomères issus de la biomasse ou non qui peut être dégradé par compostage. On distingue deux types de compostage : le compostage industriel où la température est artificiellement maintenue à plus de 50°C et où les microorganismes sont sélectionnés pour leur activité de dégradation du polymère ciblé et le compostage naturel.
- Pôle : si on considère que la soudure des billes ou sphères correspond à l'équateur, un pôle se définit pour la bille ou sphère comme pour la terre.
- Compound : ce terme anglo saxon désigne, dans le langage technique de l'homme du métier, un mélange physique de polymères, de charges et d'additifs. Les compounds sont en général obtenus sous forme de granulés par le mélange à chaud de tous les composants puis l'extrusion et la granulation.
- Principe actif : molécule active telle qu'une phéromone, un parfum ou un insecticide, par exemple contenue dans la formulation aqueuse et qui peut être encapsulée. L'encapsulation peut être réalisée dans des microcapsules comme, par exemple, celles décrites dans les brevets US8524260, US2010/278925A1, WO2009/007810A1, WO2014/096622A1, US6248364B1, WO2012/095444A2, WO99/56541.
- Dose unitaire : dans le contexte de la présente invention, cette expression fait référence à un objet unitaire solide ou semi solide formé d'une enveloppe enfermant une quantité prédéterminée spécifique d'une formulation aqueuse plus ou moins fluide ou liquide, ladite formulation pouvant contenir au moins un principe actif, éventuellement encapsulé. Ladite formulation pouvant aussi être une peinture en phase aqueuse.

La présente invention vise ainsi, selon un premier mode de réalisation, une dose unitaire pour le stockage, le transport, la délivrance ou la libération d'une formulation aqueuse, ladite dose unitaire comprenant une enveloppe enfermant ladite formulation aqueuse, ladite enveloppe comprend un matériau comprenant un mélange de deux polymères biodégradables A et B, tels que :
- le polymère biodégradable A est un polymère thermoplastique présentant une température de transition vitreuse inférieure à 0°C et
- le polymère biodégradable B est un polymère thermoplastique présentant une température de transition vitreuse supérieure à 50°C, ladite dose unitaire se présentant sous une forme sphérique comprenant deux pôles et une zone équatoriale,
- la zone équatoriale correspondant à une soudure de deux hémisphères et
- l'enveloppe présente au moins une ligne d'affaiblissement circonférentielle, voire particulièrement deux lignes d'affaiblissement circonférentielles, située(s) entre la zone équatoriale et l'un ou les deux pôles.

L'enveloppe de la dose unitaire de l'invention comprend ainsi une ligne d'affaiblissement circonférentielle située entre la zone équatoriale et un des pôles. Avantageusement l'enveloppe de la dose unitaire selon l'invention comprend deux lignes d'affaiblissement circonférentielles, situées chacune entre la zone équatoriale et l'un des pôles.

Selon un mode de réalisation, l'enveloppe peut comprendre plus de deux lignes d'affaiblissement circonférentielles et ces lignes d'affaiblissement sont situées entre la zone équatoriale et l'un des pôles ou alors entre la zone équatoriale et les deux pôles.Ainsi, un émisphère de la dose de forme sphérique peut comprendre une ou plusieurs lignes d'affaiblissement circonférentielles située(s) comme décrit ci-dessus. Avantageusement les deux hémisphères peuvent comprendre, chacun, une ou plusieurs lignes d'affaiblissement circonférentielles.

Selon un second mode de réalisation, l'invention vise une dose unitaire caractérisée en ce que :
- le polymère A est choisi dans le groupe comprenant la polycaprolactone, les polyesters de succinate, les polyesters d'acide adipique, leurs copolymères et leurs mélanges ;
- le polymère B est choisi dans le groupe comprenant les polylactides.

Selon un autre mode de réalisation de l'invention, le polyester de succinate est choisi dans le groupe comprenant le poly(butylène adipate), le poly(butylène succinate), le copoly (butylene succinate adipate) et leurs mélanges.

Dans un mode de réalisation de l'invention, la dose unitaire selon l'invention est caractérisée en ce que :
- La quantité de polymère A est comprise, en % en poids de l'enveloppe, entre 50 et 95%, particulièrement entre 60 et 95%, plus particulièrement entre 70 et 95% ;
- La quantité de polymère B est comprise, en % en poids de l'enveloppe, entre 5 et 50%, particulièrement entre 5 et 30%, plus particulièrement encore entre 5 et 20%.

Une méthode pour évaluer les propriétés mécaniques des matériaux consiste à étudier leur réaction dans des rhéomètres qui mesure le module complexe de Coulomb dont la composante réelle G' correspond au comportement élastique tandis que sa composante imaginaire G" correspond à la composante visqueuse du module.

Selon un mode particulier de réalisation le module élastique G', à une fréquence de 1 Hz et à une déformation imposée de 0.1 %, et à 40°C du matériau est inférieur à 100 MPa, particulièrement inférieur à 70MPa, inférieur à 50 MPa, particulièrement inférieur à 30 MPa, particulièrement encore inférieur à 20 MPa, voire inférieur à 10 MPa.

Le module G' du matériau de l'enveloppe peut ainsi être compris entre 5 et 100 MPa, entre 10 et 90 MPa, encore entre 20 et 70 MPa, voire encore entre 20 et 65 MPa.

Dans un mode de réalisation, l'invention vise encore une dose unitaire telle que précédemment définie, caractérisée en ce que l'enveloppe comprend une charge minérale dans une quantité comprise entre 0 et 10% en poids de l'enveloppe.

La charge minérale comprend des substances généralement d'origine naturelle, insolubles dans la formulation aqueuse de la dose unitaire de l'invention. Cette charge minérale peut être choisie dans le groupe constitué par les carbonates de calcium (naturel ou précipité) et/ou de magnésium, le sulfate de baryum, les silices, les silicates, les alumino silicates comme le talc ou le kaolin et leurs mélanges.

La présente description décrit une dose unitaire selon l'un des modes de réalisation précédents, caractérisée en ce qu'elle se présente sous un forme sphérique, hémisphérique, cylindrique, hémicylindrique, conique, tronconique, oblongue, cubique, parallélépipédique ou ovoïde.

La dose selon l'invention est particulièrement adaptée à une utilisation dans un dispositif de propulsion de type pistolet ou fusil de paint-ball ou fronde.

Dans le cadre d'application ludique, la dose unitaire sphérique, assimilable à une bille de paint-ball contient une formulation aqueuse de type peinture à l'eau utilisée couramment dans de telles application.

Alternativement, la formulation aqueuse contenue dans la dose unitaire selon l'invention peut être une formulation contenant un principe actif, en particulier un principe actif encapsulé.

Selon un mode particulier la formulation aqueuse contenue dans la dose unitaire selon l'invention peut être une formulation de peinture aqueuse. A titre de formulation de peinture aqueuse, on peut citer des formulations de peinture aqueuse sans latex comprenant un épaississant d'origine naturelle ou synthétique, associé à une charge minérale et un pigment. Un épaississant naturel peut être choisi dans le groupe constitué par les dérivés cellulosiques, les gommes, la gélatine et leurs mélanges. Particulièrement il peut s'agir d'hydroxycellulose ou de ses dérivés, de gomme de guar, de gomme arabique, de gélatine alimentaire, ou de leurs mélanges. Un épaississant synthétique peut être choisi dans le groupe constitué par les émulsions gonflables en milieu alcalin (alkali swellable emulsion, ou ASE et HASE en anglais) ou les épaississants uréthane de type HEUR (pour hydrophobic ethoxylated urethanes).

De manière avantageuse, chaque ligne d'affaiblissement circonférentielle comprend, ou consiste en, une diminution d'épaisseur de l'enveloppe.

Une ligne d'affaiblissement, dans le contexte de la présente invention, est une zone de l'enveloppe de la dose unitaire de l'invention qui présente une faiblesse structurelle et qui détermine ainsi une zone de rupture prédéterminée lorsque soumise à une contrainte mécanique.

Une telle contrainte mécanique peut être un impact lorsque la dose unitaire est propulsée à grande vitesse à l'aide d'un dispositif de propulsion pneumatique de type fusil de paint-ball.

Une contrainte mécanique peut aussi être une pression avec le doigt ou un autre objet contondant ou pointu, voire ou un outil adapté, entraînant la rupture de l'enveloppe et la libération de la libération aqueuse.

Une ligne d'affaiblissement peut être une diminution de l'épaisseur de l'enveloppe, un rainurage continu ou discontinu sur la surface interne ou externe de l'enveloppe. Un tel rainurage peut être périphérique ou sur une seule face de la dose unitaire. Une ligne d'affaiblissement peut aussi être une ou plusieurs zones d'affaiblissement partant du principe que l'enveloppe garde son intégrité pour la préservation de la formulation aqueuse lors du transport et du stockage, mais présente une propension localisée à se déchirer sous une contrainte mécanique.

Plus particulièrement encore, selon l'invention, lorsque chaque ligne d'affaiblissement circonférentielle comprend, ou consiste en, une diminution d'épaisseur de l'enveloppe de la dose unitaire selon l'invention, la diminution d'épaisseur de l'enveloppe est telle que l'épaisseur de l'enveloppe est de l'ordre de 20 à 60 %, en particulier 30 à 50% de celle dans la zone équatoriale et de 60 à 80 %, en particulier 65 à 75%, de celle aux pôles.

Comme explicité, il s'agit d'une diminution d'épaisseur de l'enveloppe dans une zone circonférentielle située en l'équateur, ou zone équatoriale de soudure, et chaque pôle.

Typiquement, l'épaisseur de l'enveloppe au niveau de la zone équatoriale de soudure est comprise entre 250 et 1000 µm, particulièrement entre 300 et 800 µm, plus particulièrement encore en 400 et 600 µm.

Typiquement, l'épaisseur de l'enveloppe au niveau des pôles est comprise entre 100 et 600 µm, particulièrement entre 200 et 500 µm, plus particulièrement encore en 250 et 350 µm.

Selon un mode de réalisation le ratio massique enveloppe/ formulation aqueuse de remplissage est compris entre 1 /20 et 1 /200.

Selon un mode particulier de réalisation, l'invention vise une dose unitaire selon l'un des modes de réalisation précédent, caractérisée en ce que la formulation aqueuse comprend un principe actif choisi parmi les composés sémiochimiques, les composés insecticides, les composés fongicides, les molécules odorantes ainsi que leurs mélanges. Concernant les molécules odorantes, il peut s'agir de molécules odorantes pour marquage olfactif de type phéromones animales.

De manière avantageuse la dose unitaire selon l'invention est caractérisée en ce que le principe actif sémiochimique est choisi parmi les phéromones d'insectes ou de mammifères, en particulier les phéromones d'insectes. Avantageusement la phéromone est choisie dans le groupe des phéromones d'insectes à chaîne grasse, en particulier une phéromone sexuelle des papillons des processionnaires du pin, des papillons des processionnaires du chêne, de la pyrale du buis, des bombyx et des carpocapses.

La viscosité de la formulation est choisie de manière à ce que la formulation soit suffisamment fluide pour être dosable dans les hémisphères et suffisamment élastique pour que les hémisphères puissent être retournés l'un sur l'autre sans verser la formulation.

De manière particulière, la formulation aqueuse d'une dose unitaire selon l'invention est de type émulsion « huile dans eau » dans laquelle la phase aqueuse comprend un agent gélifiant et la phase grasse comprend une matrice constituée d'un mélange huile et/ou cire et de principe actif, en particulier une phéromone.

Une telle formulation est décrite en détail dans la demande EP3352568.

En particulier, le ratio massique huile et/ou cire/principe actif, en particulier une phéromone, dans la phase grasse est compris entre 70/30 et 99.5/0.5, plus particulièrement entre 80/20 et 98/2.

Le remplissage des doses unitaires selon l'invention comprend, ou consiste en, une formulation aqueuse qui permet de relarguer lentement le ou les principes actifs, en particulier la ou les phéromones. Cette formulation aqueuse comprend, ou consiste en, une émulsion de type huile dans eau qui comprend de 20 à 70% en poids de phase aqueuse et de 80 à 30% en poids d'une phase grasse dispersée comprenant, ou consistant en, une matrice à base de cire naturelle et/ou d'huile naturelle biodégradables dans laquelle est incorporée le ou les principes actifs, en particulier des phéromones destinée à contrôler le comportement des ravageurs, tels que des insectes.

La stabilité de l'émulsion de la phase aqueuse est assurée par la présence d'un agent gélifiant, ou agent modifiant de rhéologie, hydrosoluble. L'agent gélifiant, ou agent modifiant de rhéologie, contribue à augmenter la viscosité de la phase aqueuse de remplissage afin que celle-ci ne s'éparpille pas au moment de l'éclatement du projectile lors de l'impact. La nature de l'agent gélifiant hydrosoluble n'est pas critique en soit à partir du moment où il est compatible avec la viscosité recherchée et avec le principe actif, en particulier la phéromone, contenu dans la phase grasse. L'agent gélifiant, ou agent modifiant de rhéologie, hydrosoluble peut être choisi parmi les polysaccharides ou encore dans le groupe comprenant les éthers de cellulose, les polyuréthanes, ou les copolymères de type HASE.

Comme éther de cellulose, on peut citer la méthyl cellulose, l'hydroxymethyl cellulose, l'hydroxyéthylcellulose, l'hydroxypropylcellulose, l'hydroxyéthyl méthyl cellulose, l'hydroxypropyl méthyl cellulose et la carboxyméthylcellulose.

On rappelle que les polymères de type HASE : (hydrophobically modified alkali swellable emulsion) sont des copolymères d'acide (méth)acrylique et d 'acrylate d'alkyle fabriqués par polymérisation radicalaire en émulsion qui ont la propriété lors de leur neutralisation par une base telle que la soude ou l'ammoniac de devenir hydrosolubles et de modifier la rhéologie de l'eau, mais dont la composition comporte en plus des macromonomères hydrophobes.

Enfin, c'est aussi un mode de réalisation de la présente invention que de fournir une utilisation d'une dose unitaire selon l'un des modes de réalisation précédent, pour la protection d'une parcelle contre un ravageur comprenant la fourniture d'une dose unitaire selon l'invention dans lequel le fluide aqueux comprend au moins un composé actif à l'égard dudit ravageur et le positionnement de la dose unitaire en un point de la parcelle afin d'assurer la diffusion du composé actif.

L'utilisation d'une dose unitaire selon l'invention est aussi caractérisée en ce que la diffusion du composé actif est réalisé par la biodégradation de l'enveloppe de la dose unitaire.

L'utilisation d'une dose unitaire selon l'invention est aussi caractérisée en ce que la diffusion du composé actif est réalisée par la réalisation d'une ouverture de l'enveloppe de la dose unitaire simultanément ou préalablement à son positionnement.

De manière alternative et tout aussi avantageuse, l'utilisation d'une dose unitaire selon la présente invention est caractérisée en ce que la diffusion du composé actif est réalisée par la projection de la dose unitaire sur un support solide afin d'assurer la rupture de l'enveloppe de la dose unitaire. Cette rupture est obtenue du fait de l'impact à haute vitesse de la dose unitaire sur un obstacle dur, par exemple un tronc d'arbre ou une branche.

Aussi, compte tenu de la biodégradabilité des matériaux de l'enveloppe, une dose unitaire selon l'invention peut être disposée à tout endroit d'une parcelle à protéger. Ainsi, le temps, l'oxygène et la lumière produisant leurs effets, l'enveloppe va rapidement se dégrader et libérer la formulation aqueuse contenue qui va pouvoir libérer le ou les principes actifs contenus, le cas échéant.

La projection des doses unitaires selon l'invention permet de créer dans une parcelle agricole ou forestière, tel qu'une forêt ou un espace arboré ou cultivé, autant de points de diffusion d'un principe actif, tel qu'une phéromone par exemple, que d'impacts réalisés. Une densité importante d'impacts combinée au relargage contrôlé du principe actif, tel qu'une phéromone par exemple, par chaque diffuseur permet de créer un nuage de principe actif, en notamment une phéromone. La diffusion de la phéromone empêche le cycle de reproduction de l'insecte de se dérouler convenablement. Cette perturbation permet de réduire la population de nuisibles et donc de préserver les arbres et les cultures des dégâts qu'ils occasionnent.

De manière surprenante, la demanderesse a mis au point un procédé permettant d'obtenir avec un haut rendement des doses unitaires selon l'invention de forme sphérique parfaitement étanches. Ce procédé est caractérisé par une étape de thermoformage des hémisphères pour obtenir une répartition de matière plastique avantageuse. La demanderesse a en effet trouvé qu'une épaisseur de l'enveloppe dans la zone située entre chaque pole et la zone équatoriale de l'ordre de 20 à 60 %, en particulier 30 à 50%, de l'épaisseur dans la zone équatoriale et de 60 à 80 %, en particulier 65 à 75%, de l'épaisseur au pôle est particulièrement avantageuse. Ainsi l'épaisseur de la paroi des sphères varie de telle sorte que l'épaisseur de la zone de soudure équatoriale est comprise entre 300 et 800 microns, l'épaisseur aux pôles est comprise entre 40% et 70% de l'épaisseur de ladite zone de soudure équatoriale, et l'épaisseur entre la zone de soudure équatoriale et le pôle, c'est-à-dire la zone circonférentielle d'affaiblissement, est comprise entre 20 et 60% de l'épaisseur de la zone de soudure équatoriale.

Une seconde étape vise à souder les 2 hémisphères selon une technique de soudure connue de l'homme du métier, par exemple par enclume et sonotrode telle que décrite dans le document FR3018268A1.

Les propriétés rhéologiques des nouveaux matériaux biodégradables de l'enveloppe des doses unitaires selon l'invention permettent, lors de l'étape de thermoformage, de réaliser la répartition de matière selon les critères définis ci-dessus.

De plus, en suivant ce nouveau procédé, le nouveau matériau de l'invention améliore sensiblement la qualité de la soudure du fait de sa composante élastique qui flue dès que la température s'élève, s'écoule et optimise ainsi le contact entre les surfaces à souder.

Par ailleurs la présence d'un polymère de basse température de transition vitreuse induit une résistance à l'élongation plus grande ce qui permet de couper la bille du squelette de polymère sans risquer de déchirer la soudure.

Grâce à toutes ces nouveautés, l'utilisateur de billes de peinture prend moins de risques de voir exploser les billes dans le propulseur et verra les morceaux de plastiques lié à l'application de la bille dans la nature se dégrader naturellement.

Un dernier avantage des billes fabriquées selon ce procédé réside dans la façon dont elles éclatent à l'impact. En effet le caractère ductile du matériau prévient une explosion génératrice de brouillard et permet une dépose quasi quantitative des formulations aqueuses sur les supports visés.

Dans le but de mieux illustrer l'invention la demanderesse a réalisé les exemples suivants

### EXEMPLES

### Matériels :

### Principes actifs contenus dans les formulations aqueuses de microcapsules:

Les principes actifs contenus dans les billes de paintball, fabriquées selon le procédé de l'invention, sont formulés selon les principes de l'invention du brevet WO2016131883A1.

Ils se présentent sous la forme d'une suspension aqueuse de microparticules contenant le principe actif. Les microparticules sont constituées d'une enveloppe solide à base d'un copolymère acrylique, entourant un coeur comprenant un mélange d'huile, de cire et de principe actif. Le dépôt sur un support (par explosion de la bille dans la canopée des arbres par exemple) de cette suspension aqueuse de microparticules se présente, après évaporation de l'eau, sous la forme d'un film capable de diffuser, de manière contrôlée, le principe actif, dans le temps.

Plusieurs types de principes actifs ont été testés dans le cadre de la présente invention :
- des phéromones qui sont : soit achetées chez des fabricants industriels, soit fabriquées par M2i Development selon des procédés connus. Dans le cas des produits synthétisés par M2i, leurs caractérisations sont validées par une analyse comparative avec un échantillon référent en chromatographie phase gazeuse.
- des insecticides ou fongicides de biocontrôle, qui sont achetés chez des fabricants industriels, par exemple le spinosad substance d'origine naturelle microbienne autorisée en biocontrôle provient de chez Corteva.
- des molécules odorantes utilisées pour le marquage olfactif.

### Polymères biodégradables utilisés pour l'enveloppe des billes :

### Approvisionnement :

Divers mélanges ou compound à base de polymères biodégradables ont été réalisés.

Les polymères suivants :
- Polylactide de haut poids moléculaire (PLA)
- Polybutylène co(Succinate/Adipate) (PBSA)
- Polybutylène succinate (PBS)
et leurs mélanges ont été achetés chez différents industriels tels que Végéplast^{®}, Natureplast^{®}, Résinex^{®}, sous forme de granulés extrudables.

### Biodégradabilité des mélanges :

La biodégradabilité, en composteur industriel ou naturellement, des composés de base formant le mélange est certifiée par les différents producteurs, suivant différentes normes (par exemple EN 13432) dépendantes de l'origine des produits ou des localisations des industriels concernés.

La biodégradabilité des compounds est en cours d'étude mais devrait naturellement découler de la biodégradabilité des composés de base même s'il est connu qu'elle peut-être potentiellement modifiée suivant les mélanges effectués (positivement ou négativement).

L'ajout d'additifs (charges minérales ou végétales, aides à la mise en forme...) peut aussi faire varier le temps moyen de destruction par biodégradation, notamment par hydrolyse (Floriane Freyermouth. Etude et modification des propriétés du poly(butylène succinate), un polyester biosourcé et biodégradable. Matériaux. INSA de Lyon, 2014. Français. NNT : 2014ISAL0009. tel-01135306). Mais d'un point de vue chimique, ces mélanges de polymères biodégradables, contrairement aux polymères oxodégradables, ne sont pas susceptibles de se dégrader en particules dangereuses pour l'environnement.

### Analyses rhéologiques des polymères :

Pour orienter le choix des mélanges de polymères biodégradables à utiliser dans le procédé selon l'invention, une caractérisation de leurs propriétés mécaniques en fonction de la température est effectuée par analyse mécanique dynamique (DMA).

Les mesures d'analyses DMA (Dynamical Mechanical Analysis) sont effectuées sur un appareil MCR301 d'Anton Par par l'entreprise Canoé@.

Une géométrie, à plans parallèles, avec un diamètre de 25mm et un gap de 1mm, est utilisée pour analyser l'échantillon, de l'état visqueux vers l'état solide. L'échantillon à caractériser, (sous forme solide) est mis en forme directement sur le système à 220°C

Les courbes DMA de refroidissement du polymère sont obtenues par application, à l'échantillon, d'une sollicitation dynamique oscillatoire de fréquence 1Hz, avec une rampe de température de -2°C/min, une fréquence de 1Hz et une déformation imposée de 0.1% (valeur garantissant la déformation linéaire du matériau i.e. la déformation du matériau est proportionnelle à la sollicitation). L'échantillon ainsi sollicité est refroidi de 200°C à 30°C.

Sur les courbes DMA obtenues, plusieurs zones sont observées :
1. Aux hautes températures, une première zone caractéristique de l'état fondu qui permet de caractériser la viscosité du produit à ces températures, et qui est directement reliée à la capacité de mise en oeuvre du polymère ; Pour chaque mélange un module visqueux est déduit de cette première partie de courbe.
2. Il apparait ensuite une zone de montée en cohésion, pour laquelle est déterminée la température pour laquelle le critère de Dahlquist est atteint (G'=105 Pa). Cette température est notée Tₚ de cohésion.
3. Enfin, est déterminé le niveau du module complexe de cisaillement G* à température ambiante (<50°C) qui rend compte de la tenue mécanique du produit.

### Extrusion-Calandrage :

L'extrusion-calandrage des granulés de polymères a été effectuée sur une ligne d'extrusion Khune de type K105, co-extrusion K60 à calandres horizontales, et filière Carraro. Capacité de l'ensemble 800 kg/h (l'extrudeuse seule a été utilisée pour les essais).

Une fois les paramètres de température et de vitesse optimisés, les compounds s'extrudent et se calandrent correctement et de manière reproductible. Il est alors possible de bien régler l'épaisseur du film obtenu. Les épaisseurs des films extrudés sont proches de 450µm, maximum 500µm.

### Thermoformage des nouveaux mélanges et formation des demi-billes :

Pour former les bandes de demi-sphères utilisées dans les modules de remplissage-soudage-découpe, une thermoformeuse est utilisée.

La thermoformeuse est une thermoformeuse prototype équipée de :
- deux fours, un inférieur et un supérieur, d'un moule en négatif avec système de vide,
- d'un poinçonnage mécanique fonctionnant sur le principe du serre flanc monté sur ressort,
- d'une découpe en continu par couteaux circulaires.

Finalement, pour le formage, les paramètres modifiables sont les températures des fours et le temps de chauffe des index.

Pour la répartition matière, il est possible de régler la course des poinçons et/ou d'utiliser le temps de retard à l'aspiration.

### Exemple 1 (hors invention) : Illustration des problèmes de faible rentabilité et de dégradation lors du stockage des billes de paintball à base de polymère oxodégradable :

Des billes contenant des formulations aqueuses de microcapsules ont été fabriquées suivant le procédé décrit dans FR3018268A1. L'enveloppe de ces billes était composée de polypropylène oxodégradable. En fin de production, ces billes ont été stockées dans des sachets étanches en aluminium, à l'abri de la lumière en chambre froide (T°≈ 8°C).

Le pourcentage de billes de bonne qualité par rapport à la quantité de billes théorique attendue a été d'environ 30.

Juste après la fin de la production des tests balistiques ont été effectués sur ces billes notamment pour vérifier le pourcentage de billes explosant dans le canon. Il a été mesuré un pourcentage d'environ 20% de billes explosant dans le canon.

Deux ans plus tard, le même test d'essai balistique a été effectué sur un échantillon de 100 billes. 50% de ces billes ont explosé dans le canon, montrant une nette dégradation des propriétés mécaniques du polymère oxo dégradable malgré les précautions prises pour le stockage. De plus, une grande quantité de billes avaient perdu leur contenu ce qui signifie qu'elles n'étaient pas complètement étanches.

### Exemple 2 : Choix des matériaux pour le nouveau polymère biodégradable

L'objectif étant de remplacer un film de polypropylène oxodégradable, des courbes rhéologiques DMA ont été réalisées, dans un premier temps sur le polypropylène oxodégradable utilisé comme référence puis sur les nouveaux matériaux biodégradables.

La courbe DMA du polypropylène oxodégradable montre que ce produit a un point de cohésion vers 132°C. Le module complexe de cisaillement est situé autour de 20 MPa, le plateau visqueux est de l'ordre de 3.10⁻² MPa.

Nous avons donc choisi de tester dans une extrudeuse bi-vis muni d'un granulateur les polymères suivants dans des proportions variables :
- Polylactide de haut poids moléculaire (PLA)
- Polybutylène co(Succinate/Adipate) (PBSA)
- Polybutylène succinate (PBS)

De manière à améliorer la miscibilité des polymères et à moduler la rigidité des matériaux obtenus entre 0 et 10% de charge minérale (talc) ont été ajoutées à certains de ces compounds.

Pour certains mélanges, des combinaisons d'additifs de démoulage de type érucamides et bromamides ont été employés.

Les caractéristiques rhéologiques obtenues sont les suivantes :

**[Tableau 1]**

| N° du nouveau matériau | Hors invention | 1 | 2 | 3 | 4 | 5 |
|---|---|---|---|---|---|---|
| Composé 2 | PP oxo | PLA (10%) | PLA (15%) | PLA (15%) | PLA (20%) | PLA (50%) |
| Composé 1 | / | PBSA (88%) | PBSA (82.5%) | PBS (82.5%) | PBSA (77%) | PBS (50%) |
| Charge minérale | / | Talc (1%) | Talc (1.5%) | Talc (1.5%) | Talc (2%) | Talc (0%) |
| Tg du composé 1 | -5 | -45 | -45 | -32 | -32 | -45 |
| Tg du composé 2 | / | 63 | 63 | 63 | 63 | 63 |
| Temp. de montée en cohésion | 132 | 63 | 63 | 98 | 63 | 93 |
| Module complexe de cisaillement G* (MPa) | 40 | 20 | 30 | 10 | 80 | 35 |
| Module visqueux après décohésion (140°C) (kPa) | 20 | 20 | 10 | 30 | 20 | 2 |

Ce tableau illustre que les nouveaux matériaux selon l'invention présentent tous :
- une température de transition vitreuse largement inférieure à 0°C ce qui confère un certain caractère élastomère au produit même si les température de stockage sont proches de 0°C.
- Leur module complexe de cisaillement G* est supérieur ou égal à 10 MPa ce qui apporte une rigidité suffisante à la bille pour tenir mécaniquement au stockage et se fracturer lors de l'impact.

### Exemple 3 : Exemple de fabrication des hémisphères par thermoformage pour le nouveau matériau n°5

Le matériel décrit précédemment est utilisé pour thermoformer le matériau n°5 contenant 50% de PLA et 50% de PBS.

Après extrusion-calandrage, comme décrit ci-dessus, les laizes obtenues se présentent comme des bandes de largeur 500 mm +/- 5 et d'épaisseur 450µ. Le matériau est souple, lisse et de couleur blanche légèrement nacrée.

Le thermoformage des hémisphères est réalisé sur la thermoformeuse décrite précédemment.

Les réglages en températures (°C) utilisés, sont les suivants :

**[Tableau 2]**

| | Fours inf. | Fours sup | Outil inf. | Outil sup | Ambiante |
|---|---|---|---|---|---|
| Ech n°5 | 175 | 175 | 33 | 35 | 26 |

Les paramètres de réglage de la thermoformeuse sont :

**[Tableau 3]**

| | Durée de maintien En sec | Retard à l'aspiration En msec | Temps de cycle en sec |
|---|---|---|---|
| Ech n°5 | 3 | 400 | 4,5 |
| Ech n°5 | 3 | 200 | 4,5 |

### Exemple 4 : exemple de réglage des modules de soudure pour contrôler la formation des billes avec le nouveau matériau biodégradable n°5

Après avoir réalisé le thermoformage des hémisphères ceux-ci sont remplis avec la formulation contenant le principe actif choisi, puis on procède à l'étape de soudure et enfin à la découpe selon le procédé décrit dans la présente invention.

Pour le nouveau polymère n°5, les réglages qui conduisent à des billes de très bonne qualité (non fuyardes, de bonne balistique) sont les suivants :

### Tableau des paramètres de soudure

**[Tableau 4]**

| Polymère | Energie | Force |
|---|---|---|
| Echantillon N°5 | 120 joules | 19,63 daN |

### Exemple 5 : Fabrication de billes de répulsif

Cet exemple illustre la fabrication de billes de paintball contenant une formulation dont le principe actif est l'alpha-pinène, connu de l'homme du métier comme un répulsif contre certains insectes (processionnaire du pin par exemple).

Une formulation contenant 0,41% en poids d'alpha-pinène est préparée comme indiqué ci-dessus. Le mélange de polymère n°5 est utilisé pour former l'enveloppe des billes.

A partir de 139 kg de formulation à base d'alpha-pinène, on fabrique des billes contenant en moyenne 2.35g de formulation chacune. Le nombre de billes de bonne qualité obtenu est de 45656 à comparer au nombre théorique de billes visées 59148. On obtient donc un rendement par rapport à la phéromone de 77% à comparer au rendement inférieur à 50% obtenu avec le procédé précédent (cf exemple 1 hors invention). Par ailleurs, les tests balistiques avec un fusil de paintball ont montré qu'aucune bille n'explosait dans le canon juste après la fabrication desdites billes et que les trajectoires de billes étaient correctes.

Ces billes ont été stockées dans des sachets aluminium étanches à T=8°C, au bout d'un an un nouveau test balistique a été effectué avec un fusil de paintball. De nouveau, et contrairement aux résultats obtenus avec le procédé du brevet FR3018268A1, aucune bille n'a explosé dans le canon.

### Exemple 6 : Fabrication de billes avec d'autres actifs.

Un procédé identique à celui selon l'exemple 5 est utilisé pour la fabrication de projectiles de type billes contenant la phéromone de processionnaire du pin, la phéromone du carpocapse, un insecticide le pyrêtre et un insecticide le spinosade, à des concentrations en % en poids dans la formulation de remplissage de 4%, 4%, 0,6% et 0,6%, respectivement.

Les projectiles obtenus sont stables au stockage, n'explosent pas dans le canon et présentent une balistique bien meilleure ce qui permet des tirs d'une plus grande précision. Les rendements de nombre de billes de bonnes qualités par rapport au nombre de billes théoriques obtenus pour ces différentes campagnes de production ont dépassé les 90%.

## Revendications

1. Dose unitaire pour le stockage, le transport, la délivrance ou la libération d'une formulation aqueuse, ladite dose unitaire comprenant une enveloppe enfermant ladite formulation aqueuse, et se présentant sous une forme sphérique comprenant deux pôles et une zone équatoriale, la zone équatoriale correspondant à une soudure de deux hémisphères, **caractérisée en ce que** ladite enveloppe comprend un matériau comprenant un mélange de deux polymères biodégradables A et B, tels que :
- le polymère biodégradable A est un polymère thermoplastique présentant une température de transition vitreuse inférieure à 0°C et
- le polymère biodégradable B est un polymère thermoplastique présentant une température de transition vitreuse supérieure à 50°C, et
- l'enveloppe présente au moins une ligne d'affaiblissement circonférentielle, voire particulièrement deux lignes d'affaiblissement circonférentielles, située(s) entre la zone équatoriale et l'un ou les deux pôles.

2. Dose unitaire selon la revendication 1, **caractérisée en ce que**:
- le polymère A est choisi dans le groupe comprenant la polycaprolactone, les polyesters de succinate et leurs mélanges ;
- le polymère B est choisi dans le groupe comprenant les polylactides.

3. Dose unitaire selon la revendication 2, **caractérisée en ce que** le polyester de succinate est choisi dans le groupe comprenant le polybutylène succinate, le Poly(butylène succinate), le coPoly (butylene succinate adipate) et leurs mélanges.

4. Dose unitaire selon l'une des revendications précédentes, **caractérisée en ce que** :
- La quantité de polymère A est comprise, en % en poids de l'enveloppe, entre 50 et 95%, particulièrement entre 60 et 95%, plus particulièrement entre 70 et 95% ;
- La quantité de polymère B est comprise, en % en poids de l'enveloppe, entre 5 et 50%, particulièrement entre 5 et 30%, plus particulièrement encore entre 5 et 20%.

5. Dose unitaire selon l'une des revendications précédentes, **caractérisée en ce que** le module d'Young du matériau de l'enveloppe est supérieur à 5 MPa, particulièrement supérieur à 10 MPa, plus particulièrement supérieur à 20 MPa.

6. Dose unitaire selon l'une des revendications précédentes, **caractérisée en ce que** l'enveloppe comprend une charge minérale dans une quantité comprise entre 0 et 10% en poids de l'enveloppe.

7. Dose unitaire selon l'une des revendications précédentes, **caractérisée en ce que** chaque ligne d'affaiblissement circonférentielle comprend une diminution d'épaisseur de l'enveloppe.

8. Dose unitaire selon la revendication 7, **caractérisée en ce que** la diminution d'épaisseur de l'enveloppe est telle que l'épaisseur de l'enveloppe est de l'ordre de 20 à 60 % de l'épaisseur dans la zone équatoriale et de 60 à 80% de l'épaisseur aux pôles.

9. Dose unitaire selon l'une des revendications précédentes, **caractérisée en ce que** la formulation aqueuse comprend un principe actif choisi parmi les composés sémiochimiques, les composés insecticides, les composés fongicides, les molécules odorantes ainsi que leurs mélanges.

10. Dose unitaire selon la revendication 9, **caractérisée en ce que** le principe actif sémiochimique est choisi parmi les phéromones d'insectes ou de mammifères, en particulier les phéromones d'insectes.

11. Utilisation d'une dose unitaire selon l'une des revendications précédentes pour la protection d'une parcelle contre un ravageur comprenant la fourniture d'une dose unitaire selon l'une des revendications précédentes dans lequel le fluide aqueux comprend au moins un composé actif à l'égard dudit ravageur et le positionnement de la dose unitaire en un point de la parcelle afin d'assurer la diffusion du composé actif.

12. Utilisation selon la revendication 11, **caractérisée en ce que** la diffusion du composé actif est réalisé par la biodégradation de l'enveloppe de la dose unitaire.

13. Utilisation selon la revendication 11, **caractérisée en ce que** la diffusion du composé actif est réalisée par la réalisation d'une ouverture de l'enveloppe de la dose unitaire simultanément ou préalablement à son positionnement.

14. Utilisation selon la revendication 11, **caractérisée en ce que** la diffusion du composé actif est réalisé par la projection de la dose unitaire sur un support solide afin d'assure la rupture de l'enveloppe de la dose unitaire.

## Patentansprüche

1. Einzeldosis für die Aufbewahrung, den Transport, die Ausgabe oder die Freigabe einer wässrigen Formulierung, wobei die Einzeldosis eine Hülle umfasst, die die wässrige Formulierung einschließt und in einer kugeligen Form vorliegt, die zwei Pole und eine Äquatorialzone umfasst, wobei die Äquatorialzone einer Schweißnaht von zwei Halbkugeln entspricht, **dadurch gekennzeichnet, dass** die Hülle ein Material umfasst, das ein Gemisch aus zwei biologisch abbaubaren Polymeren A und B umfasst, wie:
- das biologisch abbaubare Polymer A als thermoplastisches Polymer, das eine Glasübergangstemperatur unter 0°C aufweist und
- das biologisch abbaubare Polymer B als thermoplastisches Polymer, das eine Glasübergangstemperatur über 50°C aufweist, und
- die Hülle mindestens eine Umfangs-Schwächungslinie, sogar insbesondere zwei Umfangs-Schwächungslinien aufweist, die sich zwischen der Äquatorialzone und einem oder den zwei Polen befindet/befinden.

2. Einzeldosis nach Anspruch 1, **dadurch gekennzeichnet, dass**:
- das Polymer A aus der Gruppe ausgewählt ist, die Polycaprolakton, die Succinatpolyester und deren Gemische umfasst;
- das Polymer B aus der Gruppe ausgewählt ist, die die Polylaktide umfasst.

3. Einzeldosis nach Anspruch 2, **dadurch gekennzeichnet, dass** der Succinatpolyester aus der Gruppe ausgewählt ist, die Polybutylensuccinat, Poly(butylensuccinat), coPoly(butylensuccinatadipat) und deren Gemische umfasst.

4. Einzeldosis nach einem der vorangehenden Ansprüche, **dadurch gekennzeichnet, dass**:
- die Menge an Polymer A in Gew.-% der Hülle zwischen 50 und 95%, insbesondere zwischen 60 und 95%, vor allem zwischen 70 und 95% liegt;
- die Menge an Polymer B in Gew.-% der Hülle zwischen 5 und 50%, insbesondere zwischen 5 und 30%, vor allem noch zwischen 5 und 20% liegt.

5. Einzeldosis nach einem der vorangehenden Ansprüche, **dadurch gekennzeichnet, dass** das Young-Modul des Materials der Hülle größer als 5 MPa, insbesondere größer als 10 MPa, vor allem größer als 20 MPa ist.

6. Einzeldosis nach einem der vorangehenden Ansprüche, **dadurch gekennzeichnet, dass** die Hülle einen mineralischen Füllstoff in einer Menge umfasst, die zwischen 0 und 10 Gew.-% der Hülle liegt.

7. Einzeldosis nach einem der vorangehenden Ansprüche, **dadurch gekennzeichnet, dass** jede Umfangs-Schwächungslinie eine Verringerung der Dicke der Hülle umfasst.

8. Einzeldosis nach Anspruch 7, **dadurch gekennzeichnet, dass** die Verringerung der Dicke der Hülle derart ist, dass die Dicke der Hülle zirka 20 bis 60% der Dicke in der Äquatorialzone und 60 bis 80% der Dicke an den Polen beträgt.

9. Einzeldosis nach einem der vorangehenden Ansprüche, **dadurch gekennzeichnet, dass** die wässrige Formulierung einen Wirkstoff umfasst, der aus den semiochemischen Verbindungen, den Insektizid-Verbindungen, den Fungizid-Verbindungen, den Duftmolekülen sowie deren Gemischen ausgewählt ist.

10. Einzeldosis nach Anspruch 9, **dadurch gekennzeichnet, dass** der semiochemische Wirkstoff aus den Pheromonen von Insekten oder von Säugetieren, vor allem den Pheromonen von Insekten, ausgewählt ist.

11. Verwendung einer Einzeldosis nach einem der vorangehenden Ansprüche für den Schutz einer Parzelle vor einem Schädling, umfassend die Bereitstellung einer Einzeldosis nach einem der vorangehenden Ansprüche, wobei das wässrige Fluid mindestens eine im Hinblick auf den Schädling wirksame Verbindung umfasst und die Positionierung der Einzeldosis an einem Punkt der Parzelle, um die Verbreitung der wirksamen Verbindung sicherzustellen.

12. Verwendung nach Anspruch 11, **dadurch gekennzeichnet, dass** die Verbreitung der wirksamen Verbindung durch biologischen Abbau der Hülle der Einzeldosis erfolgt.

13. Verwendung nach Anspruch 11, **dadurch gekennzeichnet, dass** die Verbreitung der wirksamen Verbindung durch Herstellung einer Öffnung in der Hülle der Einzeldosis gleichzeitig oder vor ihrer Positionierung erfolgt.

14. Verwendung nach Anspruch 11, **dadurch gekennzeichnet, dass** die Verbreitung der wirksamen Verbindung durch Werfen der Einzeldosis auf eine feste Unterlage erfolgt, um den Bruch der Hülle der Einzeldosis sicherzustellen.

## Claims

1. A unit dose for storing, transporting, dispensing or releasing an aqueous formulation, said unit dose comprising a shell containing said aqueous formulation, and being presented in a spherical shape comprising two poles and an equatorial area, the equatorial area corresponding to a weld of two hemispheres and **characterized in that**:
said shell comprises a material comprising a mixture of two biodegradable polymers A and B, such that:
- the biodegradable polymer A is a thermoplastic polymer having a glass transition temperature of less than 0°C and
- the biodegradable polymer B is a thermoplastic polymer having a glass transition temperature greater than 50°C,
and
- the shell has at least one line of circumferential weakness, or even particularly two lines of circumferential weakness, located between the equatorial area and one or both poles.

2. The unit dose according to claim 1, **characterized in that**:
- the polymer A is selected from the group comprising polycaprolactone, succinate polyesters and mixtures thereof;
- the polymer B is selected from the group comprising polylactides.

3. The unit dose according to claim 2, **characterized in that** the succinate polyester is selected from the group comprising polybutylene succinate, poly(butylene succinate), coPoly (butylene succinate adipate) and mixtures thereof.

4. The unit dose according to one of the preceding claims, **characterized in that**:
- the amount of polymer A is comprised, in % by weight of the shell, between 50 and 95%, particularly between 60 and 95%, more particularly between 70 and 95%;
- the amount of polymer B is comprised, in % by weight of the shell, between 5 and 50%, particularly between 5 and 30%, more particularly still between 5 and 20%.

5. The unit dose according to one of the preceding claims, **characterized in that** the Young's modulus of the shell material is greater than 5 MPa, particularly greater than 10 MPa, more particularly greater than 20 MPa.

6. The unit dose according to one of the preceding claims, **characterized in that** the shell comprises a mineral filler in an amount comprised between 0 and 10% by weight of the shell.

7. The unit dose according to one of the preceding claims, **characterized in that** each line of circumferential weakness comprises a reduction in thickness of the shell.

8. The unit dose according to claim 7, **characterized in that** the reduction in thickness of the shell is such that the thickness of the shell is of the order of 20 to 60% of the thickness in the equatorial area and of 60 to 80% of the thickness at the poles.

9. The unit dose according to one of the preceding claims, **characterized in that** the aqueous formulation comprises an active ingredient selected from semiochemical compounds, insecticidal compounds, fungicidal compounds, odorous molecules and mixtures thereof.

10. The unit dose according to claim 9, **characterized in that** the semiochemical active ingredient is selected from insect or mammalian pheromones, in particular insect pheromones.

11. A use of a unit dose according to one of the preceding claims for the protection of a plot against a pest comprising the supply of a unit dose according to one of the preceding claims wherein the aqueous fluid comprises at least one active compound with regard to said pest and the positioning of the unit dose at a point of the plot in order to ensure the diffusion of the active compound.

12. The use according to claim 11, **characterized in that** the diffusion of the active compound is achieved by the biodegradation of the shell of the unit dose.

13. The use according to claim 11, **characterized in that** the diffusion of the active compound is carried out by making an opening of the shell of the unit dose simultaneously or prior to its positioning.

14. The use according to claim 11, **characterized in that** the diffusion of the active compound is carried out by the projection of the unit dose on a solid support in order to ensure the rupture of the shell of the unit dose.
